# EUROPÄISCHE PATENTSCHRIFT

(11) **EP 0 686 667 B1**
(45) Veröffentlichungstag und Bekanntmachung des Hinweises auf die Patenterteilung: **25.10.2000**
(21) Anmeldenummer: 95108169.4
(22) Anmeldetag: 29.05.1995
(51) Int. Cl.: C08L 55/02, C08L 55/04

(54) **Pfropfpolymerisate mit verbessertem Oberflächenglanz**
Graft polymers with enhanced surface gloss
Polymères greffés à brillance de surface améliorée

(30) Priorität: 10.06.1994 DE 4420307
(43) Veröffentlichungstag der Anmeldung: 13.12.1995
(73) Patentinhaber: BAYER AG, 51368 Leverkusen (DE)
(72) Erfinder: Köhler, Burkhard, Dr., D-47829 Krefeld (DE); Tischer, Werner, D-41542 Dormagen (DE); Piejko, Karl-Erwin, Dr., D-51467 Bergisch Gladbach (DE)

(56) Entgegenhaltungen:
- EP-A- 0 326 690
- DE-A- 3 427 208
- FR-A- 2 467 867

## Beschreibung

ABS-Formmassen, die polyether-gepfropfte Silikone enthalten sind bekannt (EP-A 326 690). Verzweigte polyether-gepfropfte Silikone werden jedoch nicht beschrieben.
gegenstand der Erfindung sind Mischungen aus
A) ABS-Pfropfpolymerisat und
B) 0,05 bis 2 Gew.-% bevorzugt 0,2 bis 1 Gew.% (bezogen auf Mischung) eines verzweigten polyether-gepfropften Silikons, erhältlich durch Hydrosilylierung von Polyethern der Formel (XI) 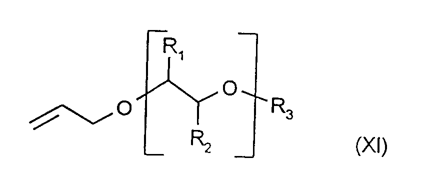 wobei
   - R¹ und R²: für Wasserstoff oder C₁-C₆-Alkyl stehen und einer der Reste R¹ oder R² gleich Wasserstoff sein muß und
   - R³: für Wasserstoff
mit SiH-funktionellen Siloxanen der Formeln (II), (III) oder (IV) 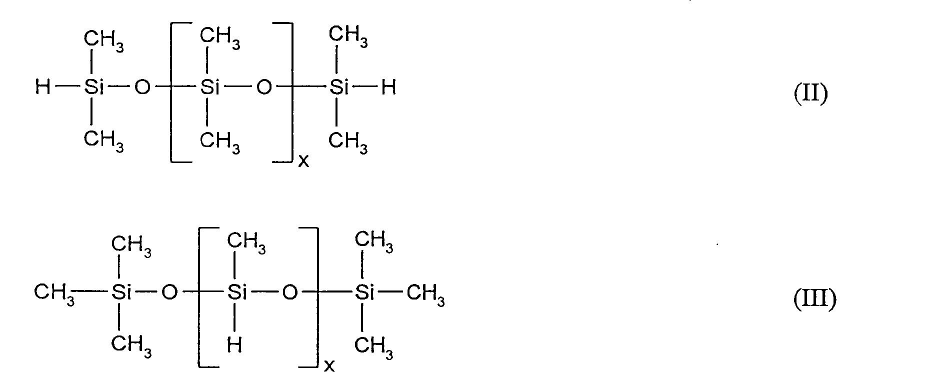 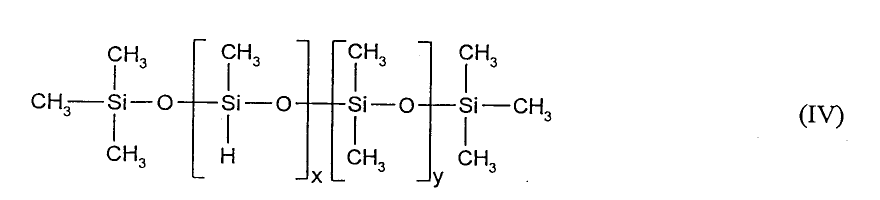 wobei
- X: 3 bis 250 und
- Y: 0 bis 50 bedeuten.

Mit ABS Pfropfpolymerisat (A) wird im vorliegenden Zusammenhang ein Material bezeichnet, das besteht aus
A1) 0 bis 90 Gew.-Teilen, bevorzugt 10 bis 80 Gew.-Teilen und besonders bevorzugt 20 bis 75 Gew.-Teilen eines oder mehrerer thermoplastischer Homo-, Co- oder Terpolymerisate, aufgebaut aus polymerisierten Vinylmonomeren, ausgewählt aus Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat und Mischungen heraus und
A2) 10 bis 100 Gew.-Teilen, bevorzugt 90 bis 20 Gew.-Teilen und besonders bevorzugt 25 bis 80 Gew.-Teilen eines oder mehrerer Pfropfprodukte aus
   A2₁) 5 bis 90 Gew.-Teilen, vorzugsweise 30 bis 80 Gew.-Teilen Styrol, α-Methylstyrol, kernsubstituiertem Styrol, Methylmethacrylat, Acrylnitril, Methacrylnitril, Maleinsäureanhydrid, N-substituiertem Maleinimid, Vinylacetat oder Mischungen daraus auf
   A2₂) 95 bis 100 Gew.-Teile, vorzugsweise 70 bis 20 Gew.-Teile eines Kautschuks mit einer Glastemperatur ≤ 10°C.

Die Produkte A1) und A2) sind bekannt und z.B. in der Deutschen Offenlegungsschrift 3 808 844 näher beschrieben.

Bevorzugte Pfropfprodukte im Sinne der Erfindung sind Pfropfprodukte von Styrol und Acrylnitril auf Polybutadien, wobei im allgemeinen 50 bis 90 Gew.-% Styrol und 10 bis 50 Gew.-% Acrylnitril in der Mischung der Pfropfmonomeren vorhanden sind. Die Pfropfprodukte enthalten im allgemeinen 10 bis 30 Gew.-% Polybutadien in Form kleiner Teilchen. Im allgemeinen ist das Polybutadien vernetzt. Man kann diese Pfropfprodukte durch Polymerisation von Styrol und Acrylnitril in Gegenwart eines Polybutadienlatex erhalten. Im allgemeinen ist das Pfropfprodukt bereits ein Gemisch aus freiem Styrol/Acrylnitril-Copolymerisat und Kautschukteilchen, auf die Styrol und Acrylnitril pfropfpolymerisiert ist. Den Kautschukgehalt dieses Produktes kann man durch Zugeben von separat hergestelltem Styrolacrylnitril-Copolymerisat auf den gewünschten Wert einstellen. Diese Mischung ist hier als Pfropfpolymerisat bezeichnet.

ABS-Pfropfpolymerisate sind bekannt. Zusammenfassende Darstellungen finden sich Ullmann's Enzyklopädie, Bd. 19, S. 277 ff. und in Roempp's Chemielexikon, 8. Auflage 1987, Bd. 2, S. 25 ff.

Diese als thermoplastische Formmassen dienenden Produkte haben für einige Anwendungen einen zu geringen Oberflächenglanz.

Es wurde gefunden, daß der Zusatz einer kleinen Menge verzweigter polyethergepfropfter Silikone (B) den Glanzgrad von ABS-Polymerisaten (A) deutlich erhöht.

Sie sind unter der Bezeichnung BYK® (Hersteller BYK-Chemie GmbH, Wesel) im Handel erhältlich.

Die polyethergepfropften Silikone enthalten aktive Wasserstoffatome. Sie sind erhältlich durch Hydrosilylierungsreaktionen der SiH-funktionellen Siloxane der Formeln II oder III oder IV mit Polyethern der Formel XI 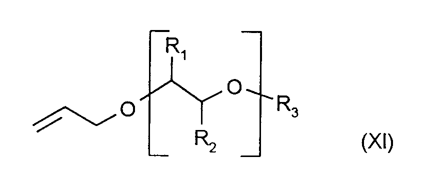 wobei
- R¹ und R²: für Wasserstoff oder C₁-C₆-Alkyl stehen und einer der Reste R¹ oder R² gleich Wasserstoff sein muß und
- R³: für Wasserstoff steht.

Die Polyether der Formel XI sind erhältlich durch anionische Polymerisation von Ethylenoxid und/oder Propylenoxid, gestartet auf Allylalkohol und gegebenenfalls anschließender Umsetzung mit Alkylierungs- oder Acylierungsreagenzien oder mit Isocyanaten, oder gestartet auf Alkoholen oder Phenolen und anschließender Umsetzung mit Allylhalogeniden.

Bei der anschließenden Umsetzung von Allyl-terminierten Polyethern mit SiH-funktionellen Silanen können im untergeordneten Maße auch verzweigte Produkte entstehen, indem z.B. bei Produkten mit R³=H unter Wasseraustritt eine Reaktion unter Bildung von Silylethern eintritt.

Die erfindungsgemäßen Mischungen können wie folgt hergestellt werden;

Durch Mischung in der Schmelze in Knetern oder Extrudern bei Temperaturen von 180-260°C, vorzugsweise 190-240°C.

Sie weisen - im Vergleich zu den reinen ABS-Pfropfpolymerisaten - einen erhöhten Oberflächenglanz auf. Dieser wird gemessen mit einem Labor-Reflektometer multi gloss 2 der Fa. Labotron bei einer Meßgeometrie von 60°.

Bei Zusatz von polyethergepfropften Silikonen, ist in vielen Fällen auch die Kerbschlagzähigkeit verbessert und die statische Aufladung vermindert. Besonders hoch wirksam sind hier mit Polyethylenoxid bepfropfte Silikone.

### Beispiele

Der ABS-Kunststoff (A) besteht aus
- 30 Gew.-Teilen: eines Pfropfpolymerisats von 50 Gew.-Teilen Styrol und Acrylnitril im Gewichtsverhältnis 72:28 auf 50 Gew.-Teile teilchenförmigen Polybutadienkautschuk (mittlerer Teilchendurchmesser d₅₀ = 400 nm), hergestellt durch Emulsionspolymerisation und
- 70 Gew.-Teilen: eines Styrol/Acrylnitril-Copolymerisats mit einem Styrol: Acrylnitril-Gewichtsverhältnis von 72:28 und einer Grenzviskosität von 0,55 dl/g (in DMF bei 20°C),
- 1,5 Gew.-Teilen: Polyethylenoxid (Antistatikum),
- 0,5 Gew.-Teilen: Magnesium-Stearat und
- 0,15 Gew.-Teilen: Ruß.

Die Kerbschlagzähigkeit wurde nach DIN 53543 geprüft. Die Messung der Glanzgrade wurde mit dem Labor-Reflektometer multi gloss 2 der Fa. Labotron mit einer Meßgeometrie von 60° vorgenommen.

### Vergleich

Die Kerbschlagzähigkeit des ABS-Kunststoffs allein beträgt 12,2 kJ/m², der Glanzgrad 89,6 %.

### Versuch 2 (Vergleich)

Man mischt 100 Gew.-Teile des ABS-Kunststoffs mit 1 Gew.-Teil polyethergepfropftem Silicon (BYK 302® der Fa. Byk-Chemie). Die Kerbschlagzähigkeit beträgt 15,3 kJ/m², der Glanzgrad 93,3 %.

## Patentansprüche

1. Mischung aus
A) ABS-Pfropfpolymerisat und
B) 0,05 bis 2 Gew.-% (bezogen auf Mischung) eines verzweigten polyethergepfropften Silikons, erhältlich durch Hydrosilylierung von Polyethern der Formel (XI) 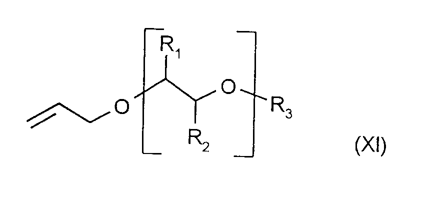 wobei
R¹ und R² für Wasserstoff oder C₁-C₆-Alkyl stehen und einer der Reste R¹ oder R² gleich Wasserstoff sein muß und
R³ für Wasserstoff,
mit SiH-funktionellen Siloxanen der Formeln (II), (III) oder (IV) 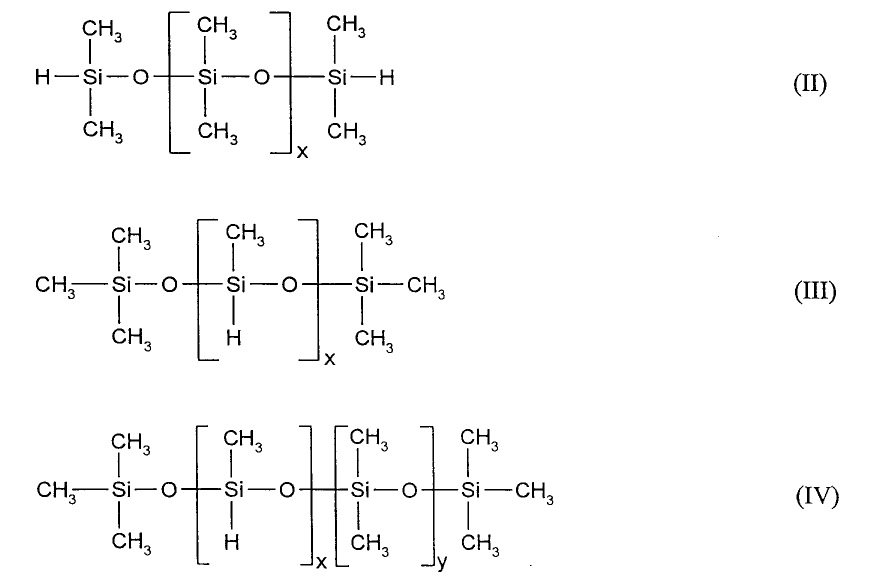 wobei
X 3 bis 250 und
Y 0 bis 50 bedeuten.

## Claims

1. A mixture of
A) ABS graft polymer and
B) 0.05 to 2 wt.% (relative to the mixture) of a branched, polyether-grafted silicone obtainable by hydrosilylation of polyethers of the formula (XI) 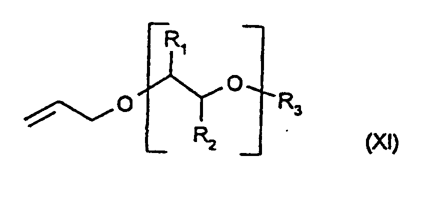 wherein
R¹ and R² denote hydrogen or C₁-C₆ alkyl and one of the residues R¹ or R² must be hydrogen and
R³ denotes hydrogen,
with SiH-functional siloxanes of the formulae (II), (III) or (IV) 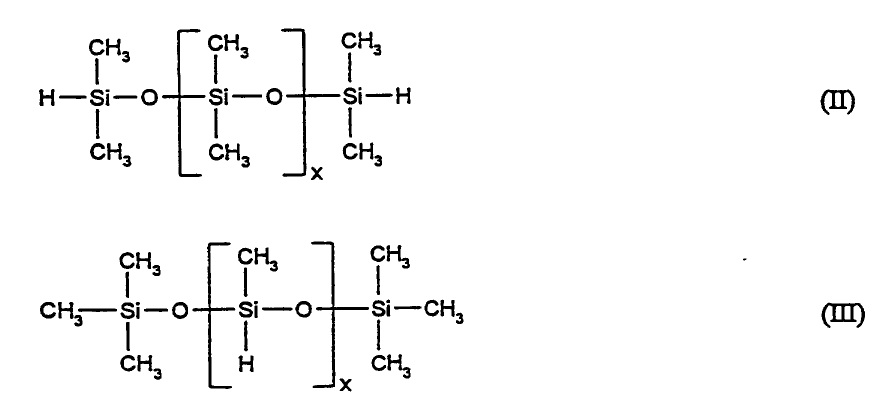 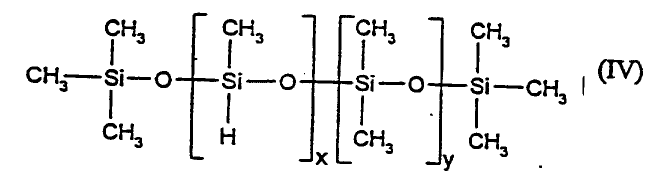 wherein
X means 3 to 250 and
Y means 0 to 50.

## Revendications

1. Mélange constitué
A) de polymère greffé de ABS et
B) de 0,05 à 2% en poids (rapportés au mélange) d'un silicone ramifié greffé de polyéther obtenu par hydrosilylation de polyéthers de la formule (XI) 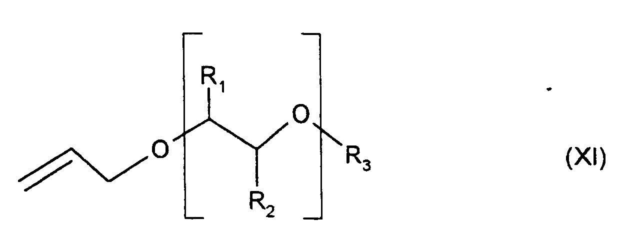
R¹ et R² représentant un atome d'hydrogène ou un groupe alkyle en C₁-C₆ et un des restes R¹ ou R² devant être un atome d'hydrogène et
R³ étant un atome d'hydrogène,
avec des siloxanes SiH- fonctionnels des formules (II), (III) ou (IV) 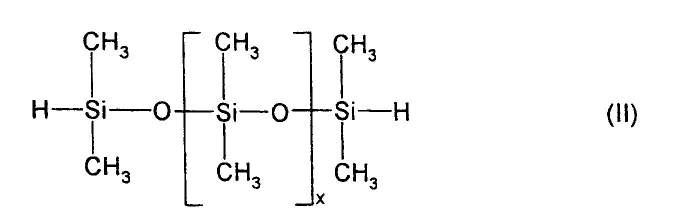 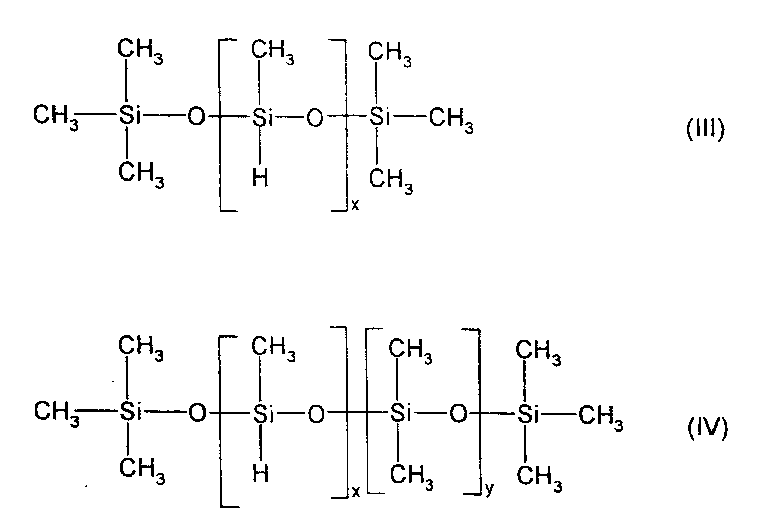
x étant compris entre 3 et 250 et
y étant compris entre 0 et 50.
